Europäisches Patentamt

European Patent Office

Office européen des brevets

(11) Publication number: **0 338 239**
**A1**

## EUROPEAN PATENT APPLICATION

(21) Application number: **89104274.9**

(22) Date of filing: **10.03.89**

(51) Int. Cl.⁴: **A23L 1/18 , A21D 13/00 , A23P 1/14**

(30) Priority: **22.04.88 US 184809**

(43) Date of publication of application:
**25.10.89 Bulletin 89/43**

(84) Designated Contracting States:
**AT BE CH DE ES FR GB GR IT LI LU NL SE**

(71) Applicant: **J.R. Short Milling Company**
**500 West Madison Northwestern Atrium Center**
**Chicago Illinois 60606(US)**

(72) Inventor: **Short, Allen T.**
**586 Golfview Drive**
**Barrington Illinois 60010(US)**
Inventor: **Wilkinson, Raleigh J.**
**14620 Mallard Lane**
**Lockport Illinois 60411(US)**

(74) Representative: **Schulmeyer, Karl-Heinz, Dr.**
**Kieler Strasse 59a**
**D-2087 Hasloh(DE)**

(54) **Microwaveable food products and methods for producing them.**

(57) A method for producing microwaveable half products comprising the steps of: forming a preliminary mixture comprising a starch-containing material, comprising corn flour, waxy maize corn flour, rice flour, wheat flour, potato flakes, or a mixture thereof, and added water adequate to bring the total moisture content of the mixture from about 30 to about 40 percent by weight; gelatinizing the starch content of the mixture to form a dough by subjecting the mixture to low shear agitation while heating; extruding the resulting dough through a shaped die and cutting to provide formed dough pieces; and drying the formed dough pieces to form half products having a moisture content of from about 9.5 to about 17 percent by weight under conditions which inhibit case hardening. The half products can be placed in a container to form a microwave package, which is in turn placed into the microwave oven.

FIG.1

EP 0 338 239 A1

## MICROWAVEABLE FOOD PRODUCTS AND METHODS FOR PRODUCING THEM

The present invention relates to microwaveable food products and methods for producing them. More particularly, the present invention relates to snack food products comprising puffable starch-containing half products, microwaveable packages comprising such half products in a microwaveable container, and to processes for the microwave puffing of such half products.

### Background of the Invention

It has long been known that certain starch-containing materials will expand or puff under appropriate heating conditions. Such materials are puffed by causing trapped moisture to expand from the liquid state to the vapor phase. Rapid heating or rapid depressurizing are the methods commonly used to convert hard, dense starch-containing materials called "half products" into the puffed crisp snack pieces. The half products are prepared by gelatinizing the starch of the starch-containing material into a dough, extruding the dough through a shaping die, cutting the dough into pieces, and drying the dough to a predetermined moisture content.

Puffing can be carried out using well-known methods such as gun puffing, baking and deep-fat frying, with the latter method being especially popular for snack foods. Deep-fat frying, however, has disadvantages. The resulting puffed snacks typically have high fat levels rendering the snacks high in calories and limiting the shelf life, even when carefully packaged.

Microwave heating has also been used as a rapid heating/puffing method for various starch-containing materials. See, for example, Van Hulle et al. U.S. patents 4,409,250 and 4,251,551. Thus, with the increasing number of consumer microwave ovens in homes, it would be desirable if puffed snack products could be prepared at th consumer's convenience by microwave puffing of commercially prepared puffable half products.

While microwave methods could eliminate certain disadvantages inherent in deep-fat frying, microwave puffing is also not without certain disadvantages. Heretofore, half products subjected to microwave heating have not all successfully puffed. Doughs formulated primarily for puffing by other puffing methods have had particularly poor microwave puff success rates. Those half products which do not successfully puff can dry, harden and even char under microwave heating. Because even small numbers of unsuccessfully puffed half products can adversely affect overall product quality, high puff success rates are vital to consumer acceptance.

Thus, it would be desirable to provide a microwaveable half product which could be puffed using a conventional consumer microwave oven. It would also be desirable to provide a microwaveable package comprising half products within a microwaveable container, which package could be placed directly into a microwave oven. Accordingly, it is an object of the present invention to provide microwaveable half products, packages and methods for the preparation of puffed snack products using conventional consumer microwave ovens.

### Summary of the Invention

Surprisingly, we have discovered a method for producing microwaveable half products comprising the steps of forming a preliminary mixture comprising a starch-containing material, wherein the starch-containing material comprises corn flour, waxy maize corn flour, rice flour, wheat flour, potato or a mixture thereof, and added water adequate to bring the total moisture content of the mixture to between about 30 to 40 percent by weight; gelatinizing the starch content of the mixture by subjecting the mixture to low shear agitation while heating the mixture at not more than 160° C (320° F); extruding the resulting dough through a shaping die and cutting the dough at the die to provide formed dough pieces; and drying the formed dough pieces to form half products having a moisture content of from about 9.5 to about 17 percent or more by weight under conditions which inhibit case hardening.

We have also discovered a microwaveable package comprising such half products enclosed in a microwaveable container.

We have also discovered a method of producing a puffed microwave food product comprising the steps of enclosing a quantity of microwaveable half product in a container and microwaving the half product and container until substantially all of the half products are puffed.

## Brief Description of the Drawings

Fig. 1 is a flow diagram of one typical embodiment of a method for making a microwaveable half product; and

Fig. 2 is a perspective view of a typical half product shape which can be made according to the invention.

## Detailed Description of the Invention

The method of this invention is dependant upon the use of a starch-containing material which, upon gelatinization under conditions of relatively low shear mixing and temperatures not exceeding about 160°C (320°F), advantageously not exceeding 155°C (311°F), will form a relatively uniform matrix. Exemplary of such starch-containing material are corn flour, waxy maize corn flour, rice flour, wheat flour and potato (generally in the form of granules or flakes). If corn flour is used, it is preferred that the flour be derived mainly from the horny endosperm of the corn kernel. "Reduction flour" is a type of flour obtained in dry milling and is derived mainly from the horny endosperm of the corn kernel. The use of corn materials derived predominantly from the horny endosperm of the corn kernel is described fully in our co-pending U.S. application Serial No. 037,054, filed April 13, 1987, which is a continuation of our U.S. application Serial No. 836,704 filed March 6, 1986.

Surprisingly, we have found that the use of waxy maize corn flour can dramatically improve microwave puffing and provide an improved, tender texture. Waxy maize corn flour is made from whole ground waxy maize corn. Amounts ranging from about 25 percent to about 40 percent by weight have been found to provide good results, although from about 10-60 percent or more can be used. However, we have found that 100 percent waxy maize corn flour does not provide a noticeable difference when compared to 100 percent reduction corn flour.

Likewise, a prepared starch material refined from waxy maize corn can also dramatically improve both puffing and texture. Only from about 5 percent by weight to about 25 percent by weight is required although more can be used to improve puffing but will significantly increase the cost of the half product. Good results have been obtained using about 15 percent. It is believed that less of the prepared starch (as compared to the full waxy maize flour) is required because the prepared starch does not contain the waxy maize corn oils and bran found in the flour which likely inhibit puffing. One brand of waxy maize starch which provides good results is Amioca Powdered Refined from Waxy Corn BH 4332A 0017, produced by the National Starch & Chemical Corp., Bridgewater, New Jersey.

Starch from common (Dent) corn contains about 27 percent amylose and 72 percent amylopectin. Waxy maize corn contains essentially 100 percent amylopectin. It is believed that the high amylopectin content of the starch may be responsible for the improved puffing and texture. The increased puffing may also be due to the starch structure itself. Waxy maize starch is a long, branch type starch that is more delicate and more elastic than dent starch.

The term "corn flour" as used in this application refers to flour obtained from Dent corn, and preferably the reduction flour obtained from such corn. The term "waxy maize corn flour" refers to flour from whole ground waxy maize corn.

Additional starch-containing materials such as pregelatinized tapioca starch can be added to the mixture used to form the half product. While expensive, tapioca starch can significantly aid the puffability of a half product, especially when the mixture used to form the half product contains an ingredient that inhibits puffing such as a full fat almond product.

Surprisingly, we have also discovered that adding hydrolyzed vegetable protein to the product markedly increases puffing. Amounts from about 1 percent to about 20 percent or more can be used, 5 percent having been found to provide good results. A hydrolyzed vegetable protein which has provided good results is HVP ST 21 powder sold by Beatrice Food Ingredients, Inc., Beloit, Wisconsin, and manufactured for Beatrice by HACO Ltd., Gumligen, Switzerland.

A variety of optional materials can also be added to the mixture which forms the half products of this invention. Such materials can render the half products and microwave-puffed snacks more nutritious and or aesthetically or organoleptically desirable. Such ingredients include additional starch materials, sucrose, various protein sources, shortening and common salt. A description of such optional materials is found in Van Hulle 4,409,250. Such optional ingredients can generally comprise up to a few percent by weight of the half product.

Likewise, other ingredients such as colors, dyes, flavors, flavored coatings, vitamins, preservatives, etc.

may be added as minor components. For example, a monoglyceride coating can be applied to the half product to improve the texture and mouth feel of the product after microwaving, and to act as a carrier for flavoring. Of course, many possibilities for additives, and particularly flavoring additives and coatings, will be readily apparent to those skilled in the art.

It has been found that the addition of common salt enhances the microwave puffing of half products of this invention. While amounts of up to about 10 percent can be used, amounts greater than about 4 percent provide a puffed product which may be too salty for many consumers. Thus, the salt content should be kept a about 1-5 percent by weight of the half product.

Good results are obtained when rice flour is used as the predominant starch-containing material of the half product. Such half products have been found to provide the best results for uniform microwaving of corners, ends, or other discontinuities of the half product. From a processing standpoint, it is advantageous to add from about 5 to about 15 percent by weight, and preferably about 10 percent by weight of corn flour or corn meal when making either a wheat or a rice half product. While the addition of corn flour or corn meal improves processing, it does not appear to affect the microwaveability of the product.

Surprisingly, it has been found that raising the pH of the half product to greater than pH 6.5 (i.e., from about 6.5-12) by addition of basic ingredients such as calcium oxide, significantly increases expansion of microwaved half product. The addition of acidic ingredients does not appear to affect expansion of half products predominantly comprised of corn but does appear to enhance expansion of predominantly rice half products. For example, citric acid can be used to lower the pH to between 3 and 6.5.

Surprisingly, it has also been discovered that the moisture content of the half product is important to good microwave puffing results. While moisture contents as low as about 9.5 percent can be used, moisture contents of about 12 to about 17 percent or more should be used, with about 13 percent to about 14 percent providing good results. If percentages higher than 17 are used, the potential for microbial spoilage may have to be addressed, for example, by addition of anti-microbial agents. Such moisture contents are generally higher than those of half products intended for frying because frying half products with 12 percent moisture or more would generally cause blistering of the puffed product.

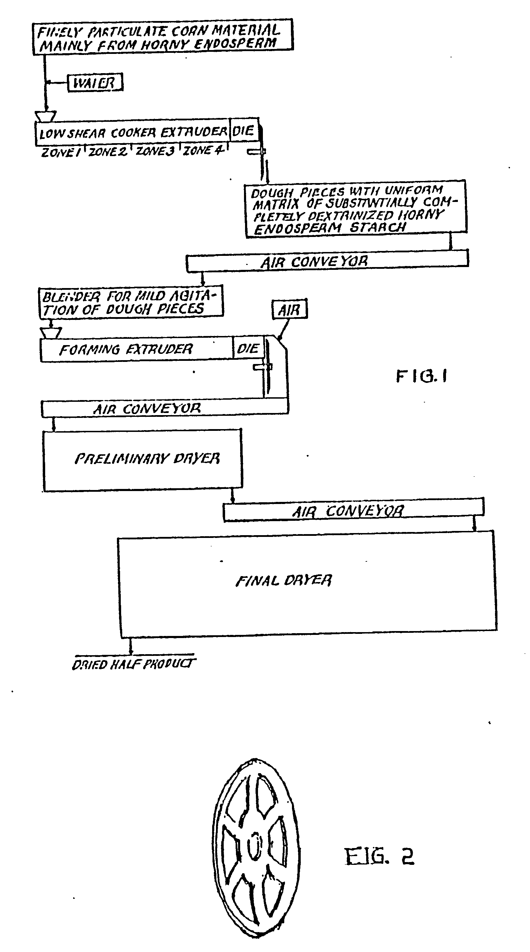

To produce a half product of this invention, the starch-containing material, such as dry milled reduction flour from yellow corn, is combined with sufficient water to bring the moisture content within the range of 30-40 percent by weight, and the mixture is delivered to a conventional single screw cooker extruder 1, Fig. 1, for processing to gelatinize the starch content of the corn material. The cooker extruder is operated to mix the material, under low shear conditions, into a uniform dough and subjects the mix to temperatures which increase from the input end of the extruder barrel toward the die, commencing at at least 55°C (131°F) adjacent the input and increasing, stepwise or progressively, to no more than 160°C (320°F) at the output end of the barrel, the precise temperatures depending upon the size and throughput rate of the cooker extruder. For best results, the barrel of cooker extruder 1 is divided into four equal zones each equipped with electrical resistance heaters. The following table gives operative temperature ranges for the four zones for a semiworks or pilot plant apparatus and for a full scale production plant.

## TEMPERATURE RANGES

| ZONE | Semiworks (2 inch Screw Diameter | Full Scale (8 inch Screw Diameter |
|------|----------------------------------|-----------------------------------|
| 1 | 55-75°C (131-167°F) | 120-130°C (248-266°F) |
| 2 | 75-85°C (167-185°F) | 130-140°C (266-284°F) |
| 3 | 100-115°C (212-239°F) | 140-155°C (284-311°F) |
| 4 | 115-125°C (239-259°F) | 150-150°C (302-320°F) |

Optimum temperatures for the four zones are 70°C (158°F), 85°C (185°F), 110°C (230°F) and 120°C (248°F) for the semiworks scale apparatus and 125°C (257°F), 135°C (275°F). 145°C (293°F) and 155°C (311°F) for a full scale apparatus with cooker extruder 1 having a screw diameter of 8 inches. Residence time of the mix in the barrel of cooker extruder 1 is in the range of 1-1.5 min. and the head pressure is sufficiently low to cause the dough to ooze from the die in the form of a relatively shapeless glob. Such operation of cooker extruder 1 achieves a uniform and substantially complete gelatinization of the starch and not only distributes the added water uniformly through the dough during the mixing operation but also causes at least a substantial part of the moisture to be entrapped in the tiny capillary-like cells of the starch matrix by the time the mix, now in the form of a uniform dough, is forced through the die orifice or orifices.

The dough emerging from the die of cooker extruder 1 is cut by rotary knife 2 into relatively small glob-like pieces 0.5-4 inches (1.3-10cm) long, each piece consisting of a uniform dough matrix in which the starch is up to 98 percent gelatinized, as measured by the Maltese Cross test, with the matrix having substantially the same total moisture content as did the corn material after the water was added. Despite the relatively high moisture content, the dough pieces are individually coherent and can be handled and conveyed. After being cut off by knife 2, the dough pieces are delivered by air conveyor 3 to blender 4, typically a radial blade rotary blender, which subjects the dough pieces to a relatively gentle agitation in the presence of ambient air so as to reduce the moisture content at and near the surfaces of the pieces. The pieces are then delivered directly into the input end of a kneading and forming extruder 5. The dough pieces are treated in blender 4 for a period time such that the total moisture content of the pieces is reduced by 3-10 percent, bringing the moisture content down to the range of 25-37 percent by weight.

Extruder 5 is so designed as to have a first stage, which serves primarily to knead the dough pieces into one continuous mass, and a second stage, which is adjacent the die and serves to compact the dough mass just before it enters the die. The extruder is of the type in which both the screw and the barrel are water cooled, with the cooling water exit temperature being measured, and the operator observes the extruded material and adjusts the cooling water temperature to make the dough firmer or more pliable, as required to achieve adequate shaping and proper cutting of the extruded material. The die structure of extruder 5 includes a preliminary portion to divide the dough mass into a plurality of individual strands, and a die orifice for each strand, the orifices converting the strands into the desired cross-sectional shape. Head pressure for extruder 5 is 1160-1855 p.s.i., advantageously 1400-1680 p.s.i. Upon emerging from the die orifices, the strands are cut into individual pieces by rotary knife 6. As they are cut off at the die orifices, the individual formed pieces are directed by an air stream through a confining shroud 7 into air conveyor 8 and delivered by that conveyor to the input hopper of a predryer 9.

Dryer 9 is of the endless belt type in full scale production apparatus and, for practical purposes, a static dryer is used in semiworks scale operations. When of the continuous belt type, the belts are of screen material and the drying atmosphere is directed upwardly through the layer of formed half product pieces supported by the belt. The drying atmosphere can be ambient air at 70-80°C (158-176°F). Residence time in the dryer is selected to effect removal of the surface moisture from the formed pieces before discharge from the dryer so that the formed pieces are then substantially non-sticky. The surface moisture of the formed pieces does not exceed 5 percent by weight and is usually less, so that the pieces as discharged from predryer 9 have a total moisture content of not less than 20 percent by weight, advantageously 20-24 percent, with substantially all of the moisture being uniformly distributed internally of the formed piece.

After discharge from dryer 9, the formed pieces are delivered by air conveyor 10 to a final dryer 11 by which the formed pieces are slowly dried, without case hardening, until the moisture content is in the range of about 9.5-17 percent, advantageously about 13-14 percent, by weight. For full scale production, dryer 11 advantageously includes several stages through which the formed pieces are carried by formainous endless conveyor belts, a drying atmosphere of controlled temperature and humidity being passed upwardly through the conveyor belts and the layers of formed pieces carried thereby. Excellent results are achieved when the dryer includes five successive stages, with the drying atmosphere being air at 47-50°C (116-122°F) and a relative humidity of 81 percent in the first stage; 51-54°C (123-129°F) and a relative humidity of 92 percent in the second stage; 50-54°C (122-129°F) and a relative humidity of 89 percent in the third stage, 47-51°C (116-123°F) and a relative humidity of 84 percent in the fourth stage, and 42-47°C (107-121°F) and a relative humidity of 34 percent in the fifth stage. Residence times in the five stages can be equal, with a total residence time in the dryer of 5.5-7.5 hours. The above temperatures and residence times will yield a half product having about a 13-14 percent moisture content. Temperatures and residence times can be increased for lower moisture contents or decreased for higher moisture contents.

When a potato starch-containing material is used, it is advantageous to use a single stage or transfer screw in the single screw cooker extruder 1. The use of either such screw will transfer the material through the gelatinizer more quickly and at a lower shear, thereby preventing overcooking of the potato starch.

The shape of the half product plays an important part in its microwaveability. The best results have been obtained using half products of continuous shape wherein the product flows in a uniform pattern into the various connections where the product is formed. An example of this is the wagon wheel shown in Fig. 2. Another example of a continuous shape that microwaves well is the "onion ring" shape. Half products having discontinuities or protruding parts do not microwave as well because the discontinuity or protruding part often does not puff and/or becomes hard. For example, the corners on a square shaped product generally do not microwave very well. As mentioned above, a half product comprised predominantly of rice has been found to provide the best microwave puffing results when discontinuities such as ends, corners or protrusions are desired.

We have also found that the use of a microwaveable container which holds the half products while they are being microwaved can provide enhanced results. Good results have been obtained using a reclosable, microwaveable box into which a predetermined quantity of half product is placed. Good results have also been obtained using microwaveable bags, which are well known. Such bags appear to fall into one of two categories, i.e., those having "susceptor" plates which reflect microwave energy, and those that do not. Bags without susceptor plates have generally been found to work well because a susceptor plate can cause charring of the half product. However, consistently good results have been achieved using a bag produced by the Stone Container Company, Schaumburg, Illinois, having a four inch gusset and a 48 gauge susceptor plate with an 18-24 optical density containing 3.5 ounces (about 100 grams) of half product. Using that bag, even the corners of fish-shaped half products cooked completely with no hard spots.

It is believed that the enhanced results are due to the retention of heat or steam in the box or bag during microwave puffing. The use of a box, bag or other microwaveable container is further desirable because, similar to microwave popcorn products, prepackaging the microwaveable half product in a microwaveable container provides the consumer with a "microwaveable package" which can simply be inserted directly into the microwave oven. Thus, there is no need to use (and later clean) any housewares such as bowls.

Good results have been obtained using a microwaveable box produced by James River Corporation, Paperboard Packaging Group, Neenah, Wisconsin, constructed of 16/1000 inch paperboard polycoated on both sides.

The box is approximately 10.1 cm wide, 13.3 cm long, and 3.5 cm high. Approximately 30 grams of half product shaped substantially as that shown in Fig. 2 are used to form the microwaveable package, which can be microwaved as discussed below. However, other size boxes have worked equally well. Generally, the boxes or bags will contain from about 20 to about 150 grams of half product.

The length of time required for microwave puffing depends on the type of microwave used because there are no uniform standards for microwaves. For example, using a microwaveable package comprising about 30 grams of half product in the above James River Corporation Box, the duration of times for microwave puffing can range from about 1 minute in one 700 watt microwave oven to about 2 minutes in a different 700 watt microwave oven (see Examples 2 and 3, below). As with all other microwave products for home use, the consumer will have to perform some initial experimentation to optimize microwave cooking times. Generally, however, the time required to puff about 30 grams of half product, with or without a container, will be from about 40 seconds to about 2 minutes.

It can also be advantageous to puff the half products of this invention using multiple exposures of microwave energy. Such practice is also quite commonly used by consumers. For example, half products (with or without a container) can be exposed to a first period of microwave energy, thereby providing at least partially microwaved half products. The half products can then be stirred, shaken or otherwise redistributed. If the half products are in a container such as a box, the box can be substantially inverted, shaken and replaced in the microwave. The at least partially microwaved half products can then be microwaved for an additional period of time.

As stated above, it has been found that approximately thirty grams of half product made in accordance with this invention when placed in the above James River Corporation box, require from about 1-2 minutes in different 700 watt microwave ovens. Good results have been achieved using a first period of microwave exposure of from about 30 seconds to about 80 seconds, and the additional time period being from about 15 seconds to about 40 seconds. The box is shaken and inverted in between the first and second microwave exposures.

The half products, microwaveable packages, and methods of this invention are illustrated by the following examples.

## EXAMPLE 1

A half product of this invention can be made as follows: Cooker extruder 1 was a conventional single screw cooker extruder manufactured by Mapimpianti S.P.A. and having a 2 inch screw diameter, the barrel being equipped with four electrical resistance heaters for controlled heating of the four successive zones of the extruder, the extruder screw being conventionally designed for low shear operation, and the extruder being operated at such low head pressures that the head pressure was not measured. Such apparatus is of pilot plant or semiworks scale and is used in experimental runs for the sake of economy.

A dry milled reduction flour from yellow corn was used as the source of gelatinizable starch. The flour had an initial moisture content of 10.5 percent by weight and a fat content of 1.5 percent by weight. The particle size distribution of the flour was such that only 4.3 percent by weight remained on a 60 mesh U.S. Standard Series screen and 35.6 percent by weight passed a 100 mesh screen. The mixture supplied to cooker extruder 1 consisted of 74.7 percent by weight corn reduction flour and 25.3 percent by weight added water. Cooker extruder 1 was operated at 70°C (158°F) in the first zone, 85°C (195°F) in the second zone, 110°C (230°F) in the third zone and and 120°C (248°F) in the fourth zone. The screw was operated at 37 r.p.m. The die orifice was of circular transverse cross section and the dough emerged from the orifice more as an oozing glob than a shaped strand. Knife 2 was rotated at a speed such that all of the dough pieces obtained were in the size range of 0.5-4 inches (1.2-10 cm) in length. The dough pieces were air-conveyed to blender 4 and there agitated for 5 min., then delivered into the input end of forming extruder 5. Moisture content of the dough pieces as delivered to the forming extruder was approximately 25 percent by weight.

The extrusion orifices of the die of forming extruder 5 were shaped to provide each extruded strand with a diameter of 1.2 inches (3.1 cm) and the wagon wheel transverse cross section seen in Fig. 2. Extruder 5 was operated with a screw temperature of 27°C (80.6°F), a barrel temperature of 40°C (104°F) and a head pressure within the range of 1400-1680 p.s.i. Knife 6 was rotated at a speed such that the formed pieces cut off by the knife had a thickness of approximately 0.05 inch (1.25 mm). The shaped pieces thus obtained were air-conveyed to preliminary dryer 8, in this case a static dryer in which the pieces were shelf-supported rather than being conveyed and were subjected to flowing air as the drying atmosphere at 78°C (172°F) for 1.5 min to remove surface moisture and render the shaped pieces non-sticky. The shaped pieces were then air-conveyed to final dryer 10, in this case again a static dryer. The flowing drying atmosphere in dryer 10 was air 60°C (140°F) and a relative humidity of 85 percent, residence time of the product in the dryer being 6 hours.

The half products thus produced were of substantially uniform size, shape and color, all being slightly cupped as seen in Fig. 2 and all having a very hard, slightly shiny external surface of uniform yellowish color described by some observers as golden and others are a yellowish tan. In 85 percent of all of the half products, the rim was essentially circular, the remaining 15 percent having one rim portion extending between two adjacent "spokes" which curved slightly inwardly, the remainder of the rim being essentially circular. The half products were so uniform that the diameter of the "hub" openings did not vary by more than 0.1 inch (0.25 mm) and there was no discernible difference in either the width or the thickness of the "spokes" or the width or the thickness of the rim. The half products were sufficiently strong to support a total weight in excess of 3.6 lbs. (1.31 kg.) applied to the center of the half product when the half product had been placed concave side down on a supporting surface.

## EXAMPLE 2

The procedure of Example 1 was repeated without material change except for substituting for the reduction corn flour a mixture comprising approximately 88 percent by weight of rice flour, 10 percent by weight of reduction corn flour and 2 percent by weight salt.

Approximately 30 grams of the resulting half product was placed in the above-described James River Corporation box, and in turn placed into a Litton, Generation II, 700 watt home microwave oven. The product was microwaved at high power for a first time period of about 40 seconds. The box was inverted, shaken and microwaved for an additional 20 seconds at high power. Substantially all of the half product was uniformly puffed.

## EXAMPLE 3

The procedure of Example 2 was repeated, but an Amana 700 watt microwave oven was used to microwave the half products. The times required to properly process the half products were almost doubled from those described in Example 2.

## EXAMPLE 4

A rice-based wagon wheel produced in Example 2 was coated with a mixture comprising equal parts of a distilled acetylanted monoglyceride and a nacho cheese flavoring. (The half product was dipped in the mixture and allowed to sit overnight.) The product was then microwaved substantially as described in Example 2. The product microwaved extremely well and most of the flavoring stayed on the product. There was also a market improvement in the texture and mouth feel of the product.

Examples 5-9 illustrate different half product compositions in accordance with this invention. Each half product produced had a moisture content of about 13-14 percent. Approximately 30 grams of each were placed in the above-identified James River Corporation box and microwaved substantially as described in Example 2. In each instance, all of the half products puffed and were edible.

## EXAMPLE 5

The half product comprised 80 grams of reduction corn flour, 15 grams of the above-described Amioca Powdered Refined Starch from Waxy Maize (National Starch & Chemical Corp.), and 5 grams of the above described HVP ST 21 hydrolyzed vegetable protein from Beatrice. The microwaved half product had very high expansion and the outer surface had a sheen.

## EXAMPLE 6

The half product comprised 73 percent reduction corn flour, 25 percent waxy maize corn flour and 2 percent salt. The half product had good expansion when microwaved.

## EXAMPLE 7

The half product comprised 58 percent reduction corn flour, 40 percent waxy maize corn flour and 2 percent salt. The half product had good expansion when microwaved.

## EXAMPLE 8

The half product comprised 83 percent reduction corn flour, 15 percent rice flour and 2 percent salt. The half product had good expansion and was crunchy.

## EXAMPLE 9

The half product comprised 82 percent reduction corn flour, 15 percent of the above described Amioca waxy maize starch, 2 percent salt and 1 percent calcium oxide to raise the pH of the product to greater than 7. The half product had very high expansion.

## EXAMPLE 10

Examples 5-9 were substantially repeated but with rice flour substituted for reduction corn flour. Good results were achieved.

While several advantageous embodiments have been chosen to illustrate the invention, it will be understood by those skilled in the art that various changes and modifications can be made therein without departing from the scope of the invention as defined in the appended claims.

## Claims

1. A method for producing microwaveable half products comprising the steps of
forming a preliminary mixture comprising a starch-containing material, wherein the starch-containing material comprises corn flour, waxy maize corn flour, rice flour, wheat flour, potato, or a mixture thereof, and added water adequate to bring the total moisture content of the mixture to from about 30 to about 40 percent by weight;
gelatinizing the starch content of the mixture to form a dough by subjecting the mixture to low shear agitation while heating the mixture at not more than 160° C (320° F);
extruding the resulting dough through a shaping die and cutting the dough at the die to provide formed dough pieces; and
drying the formed dough pieces to form half products having a moisture content of from about 13.0 to about 17 percent by weight under conditions which inhibit case hardening.

2. The method according to claim 1, wherein the starch-containing material is predominantly rice flour.

3. The method according to claim 1, wherein the starch-containing material is predominantly wheat flour.

4. The method according to claim 1, wherein the starch-containing material is predominantly potato.

5. A microwaveable half product produced by the method of claim 1.

6. A method of producing a puffed microwaved food product comprising the steps of
enclosing microwaveable half products produced by the method of claim 1 in a microwaveable container capable of substantially retaining heat and steam, and
microwaving the half products and container until substantially all of the half products are puffed.

7. The method of claim 6, wherein the step of microwaving comprises multiple exposures of the half products and container to microwave energy.

8. The method of claim 7, wherein the step of microwaving comprises the steps of
microwaving the half products and container for a first period of time to provide at least partially microwaved half products,
physically moving the container or the at least partially microwaved half products to redistribute the at least partially microwaved half products, and
microwaving the partially microwaved half products for an additional period of time.

9. A microwaveable package comprising
a microwaveable container capable of substantially retaining steam and heat, and
a microwaveable half product produced in accordance with claim 1 enclosed in said container.

FINELY PARTICULATE CORN MATERIAL
MAINLY FROM HORNY ENDOSPERM

WATER

LOW SHEAR COOKER EXTRUDER | DIE
ZONE 1 | ZONE 2 | ZONE 3 | ZONE 4

DOUGH PIECES WITH UNIFORM
MATRIX OF SUBSTANTIALLY COM-
PLETELY DEXTRINIZED HORNY
ENDOSPERM STARCH

AIR CONVEYOR

BLENDER FOR MILD AGITA-
TION OF DOUGH PIECES

AIR

FORMING EXTRUDER | DIE

AIR CONVEYOR

PRELIMINARY DRYER

AIR CONVEYOR

FINAL DRYER

DRIED HALF PRODUCT

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 966 990 (C.W. CREMER et al.) <br> * abstract, claims 1,5,7 * | 1,2,4,6 ,7 | A 23 L 1/18 <br> A 21 D 13/00 <br> A 23 P 1/14 |
| X | DE-A-1 692 806 (UNILEVER N.V.) <br> * claims 1,3,10,17 * | 1,4 | |
| D,A | US-A-4 251 551 (G.J. VAN HULLE et al.) <br> * abstract, claims 1,8 * | 1,6,7 | |
| D,A | US-A-4 409 250 (G.J. VAN HULLE et al.) <br> * abstract, claim 1 * | 1,6,7 | |
| X | PATENT ABSTRACTS OF JAPAN <br> vol. 12, no. 47 (C-475)(2894), 12th <br> February 1988; & JP - A - 62 195 250 <br> (HOUSE FOOD IND. CO. LTD.) 28-08-1987 | 1 | |

TECHNICAL FIELDS
SEARCHED (Int. Cl.4)

A 23 L 1/00
A 21 D 13/00
A 23 P 1/00

The present search report has been drawn up for all claims

| Place of search | Date of completion of the search | Examiner |
|---|---|---|
| BERLIN | 12-07-1989 | SCHULTZE D |

EPO FORM 1503 03.82 (P0401)